# EUROPÄISCHE PATENTSCHRIFT

(11) **EP 2 655 772 B1**
(45) Veröffentlichungstag und Bekanntmachung des Hinweises auf die Patenterteilung: **22.08.2018**
(21) Anmeldenummer: 11785395.2
(22) Anmeldetag: 16.11.2011
(51) Int. Cl.: H02P 1/20, H02P 7/29

(54) **ANLAUFSCHALTUNG FÜR EINEN GLEICHSTROM-ELEKTROMOTOR**
STARTING CIRCUIT FOR A DIRECT-CURRENT ELECTRIC MOTOR
CIRCUIT DE DÉMARRAGE POUR MOTEUR ÉLECTRIQUE À COURANT CONTINU

(30) Priorität: 22.12.2010 DE 102010063856
(43) Veröffentlichungstag der Anmeldung: 30.10.2013
(73) Patentinhaber: Robert Bosch GmbH, 70442 Stuttgart (DE)
(72) Erfinder: RUMMEL, Michael, 77855 Achern-Oensbach (DE); MICHENFELDER, Gebhard, 77839 Lichtenau (DE)
(86) Internationale Anmeldenummer: PCT/EP2011/070281
(87) Internationale Veröffentlichungsnummer: WO 2012/084352

(56) Entgegenhaltungen:
- DE-A1- 19 944 964
- DE-C1- 10 241 778
- JP-A- 57 009 275
- US-A- 5 014 793

## Beschreibung

### Stand der Technik

Die vorliegende Erfindung betrifft einen Steuerteil für eine Anlaufschaltung eines Gleichstrom- Elektromotors, mit einem veränderbaren Widerstand, mit dem eine Anlaufspannung des Gleichstrom- Elektromotors einstellbar ist, wobei der veränderbare Widerstand mittels einer Steuerspannung steuerbar ist. Die vorliegende Erfindung betrifft weiterhin eine Anlaufschaltung für einen Gleichstrom- Elektromotor mit einem erfindungsgemäßen Steuerteil. Die vorliegende Erfindung betrifft weiterhin eine Verstellvorrichtung mit einem Gleichstrom- Elektromotor und einer Anlaufschaltung mit einem erfindungsgemäßen Steuerteil.

Elektromotoren, insbesondere Kleinmotoren für Verstellantriebe, insbesondere in Kraftfahrzeugen, beispielsweise zum Verstellen von Fenstern, Sitzen oder einem Schiebedach, werden häufig direkt über Schalter und/oder Relais eingeschaltet oder umgepolt.

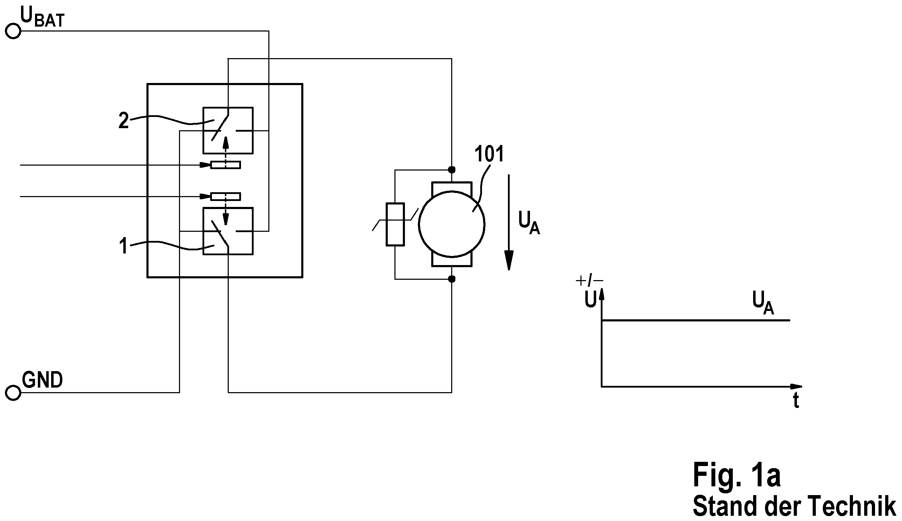

Eine solche Schaltung gemäß dem Stand der Technik zeigt die **Fig. 1(a)****.** Zum Einschalten und/oder Umpolen des Elektromotors 101, der hier als Gleichstrommotor ausgebildet ist, sind ein erster Schalter 1 und ein zweiter Schalter 2 vorgesehen, die wahlweise mit einer Batteriespannung U_{BAT} oder Masse GND verbindbar sind. Wenn der erste Schalter 1 an der Batteriespannung U_{BAT} anliegt und der zweite Schalter 2 an der Masse GND, wird der Elektromotor 101 in einer Drehrichtung betrieben. Liegt dagegen der erste Schalter 1 an der Masse GND und der zweite Schalter 2 an der Batteriespannung U_{BAT} an, wird der Elektromotor 101 in der umgekehrten Drehrichtung betrieben.

Da das Umschalten direkt über die beiden Schalter 1, 2 erfolgt, wird die Batteriespannung U_{BAT} dabei unmittelbar an den Elektromotor 101 angelegt, so dass die am Elektromotor 101 anliegende Ausgangsspannung U_{A} hier der Batteriespannung U_{BAT} entspricht.

Beim Anfahren wird der Rotor eines solchen Elektromotors 101 aufgrund eines dabei entstehenden starken Stromimpulses sehr stark beschleunigt. Dies führt, insbesondere bei schnellem Umpolen des Elektromotors 101 zu einem klackenden oder schlagenden Geräusch, welches oft durch das Spiel zwischen den zu verstellenden Bauteilen noch verstärkt wird. Denn diese Bauteile werden ebenfalls beim Anfahren zunächst stark beschleunigt, bis das Spiel beseitigt ist. Beim Eingriff miteinander werden sie anschließend pulsartig stark wieder abgebremst. Die dadurch entstehende Geräuschentwicklung ist insbesondere in Kraftfahrzeugen unerwünscht.

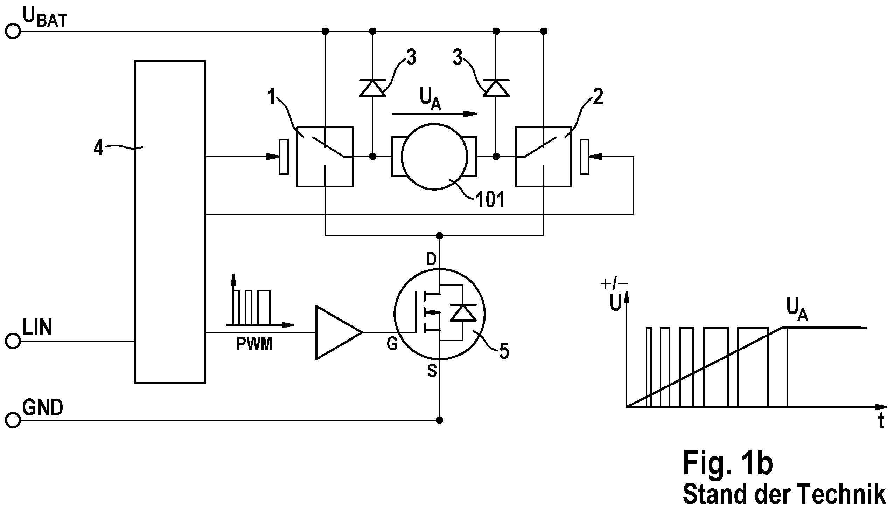

Alternativ zur Schaltung der **Fig. 1(a)** ist es daher auch bekannt, zum Ansteuern solcher Elektromotoren 101 intelligente Elektroniken einzusetzen, die beispielsweise über Relais und einen Mikrocontroller 4 geschaltet und getaktet werden können. Eine solche Anlaufschaltung 100 gemäß dem Stand der Technik zeigt die **Fig. 1(b)****.**

Neben den beiden Schaltern 1, 2 sieht die Schaltung der **Fig. 1(b)** einen steuerbaren Widerstand 5 hier in Form eines n-Kanal MOSFET (metal oxid semiconductor field effect transistor) vor, der die am Elektromotor 101 anliegende Anlaufspannung U_{A} steuert. Dazu wird ein pulsweitenmoduliertes Signal PWM verwendet, welches als Steuerspannung für den MOSFET dient. Der Mikrocontroller 4 ist so programmiert, dass er das pulsweitenmodulierte Signal PWM mit einer optimierten Pulsweite sowie einer optimierten Frequenz ausgibt. Die Anlaufspannung U_{A} entspricht dann dem Mittelwert des pulsweitenmodulierten Signals PWM. Die Anlaufschaltung 100 sieht außerdem Freilaufdioden 3 für die beiden Drehrichtungen vor, um Spannungsspitzen beim Abschalten beziehungsweise Umpolen zu vermeiden und das Abschalten und Umpolen des Elektromotors 101 schadensfrei zu ermöglichen.

Die Anlaufschaltung der **Fig. 1(b)** ermöglicht daher einen Software- gesteuerten Sanftanlauf des Elektromotors. Sie ist jedoch verhältnismäßig kostenintensiv, so dass sie nur im hochpreisigen Marktsegment eingesetzt wird.

Die DE 199 44 964 A1 offenbart ein Verfahren zum Steuern und Regeln eines Verstellantriebs in Kraftfahrzeugen, wobei der Steueranschluss des MOSFET mit einem Mikroprozessor als Steuer- und Regeleinrichtung verbunden ist, wobei der Mikroprozessor ist dabei über einen Spannungsteiler und ein Relais mit dem Elektromotor verbunden ist.

Die JP 57009275 offenbart eine Steuerschaltung für einen Wechselstrom-Elektromotor, bei dem ein Frequenzfilter verwendet wird, der mit einem soft-star-Transistor verbunden ist.

Bei einer Steuerschaltung gemäß der DE 102 41 778 C1 ist ein Eingangssignal eines Frequenzfilters ein pulsweitenmoduliertes Signal. Dabei wird das Ausgangssignal des Frequenzfilters mit Hilfe eines logischen Komparators mit dem Ausgangssignal eines Sägezahngenerators verglichen, wobei das Ausgangssignal als Eingangssignal für einen MOSFETden Elektromotor steuert.

Bei der US 5,014,793 ist das Eingangssignal für einen MOSFET, der den Motor regelt, das Ausgangssignal einer Logikschaltung, deren Eingangssignale ein pulsweitenmoduliertes Ausgangssignal eines Sanftanlaufmoduls und ein Ausgangssignal eines Drehmoment- Referenz Moduls, welches den durch den Motor fließenden Strom erfasst, sind.

### Offenbarung der Erfindung

Aufgabe der vorliegenden Erfindung ist es, eine kostengünstige Anlaufschaltung für einen herkömmlichen Gleichstrom- Elektromotor zu schaffen, die einen sanften Anlauf des Gleichstrom- Elektromotors ermöglicht, so dass ein mittels des Gleichstrom- Elektromotors angetriebener Verstellmechanismus geräuscharm oder sogar geräuschfrei verstellbar ist.

Die Aufgabe wird gelöst mit einem Steuerteil **einer erfindungsgemäßen** Anlaufschaltung eines Gleichstrom- Elektromotors nach Anspruch 1, mit einem veränderbaren Widerstand, mit dem der Anlaufstrom des Gleichstrom- Elektromotors veränderbar ist, wobei der veränderbare Widerstand mittels eines Steuersignals einstellbar ist, wobei der Steuerteil einen Frequenzfilter umfasst, dessen Ausgangssignal das Steuersignal bildet und so vorgesehen ist, dass der veränderbare Widerstand zeitverzögert eingeschaltet wird.

Der veränderbare Widerstand ist bevorzugt als n-Kanal MOSFET ausgebildet. Prinzipiell sind aber auch andere Transistor-Typen bevorzugt, beispielsweise andere Feldeffekttransistoren oder Bipolartransistoren. Außerdem ist es bevorzugt, integrierte Komponenten zu verwenden, so dass die Montage des Steuerteils vereinfacht ist oder sogar auf eine Leiterplatte verzichtet werden kann. In der Ausführungsform als MOSFET weist der veränderbare Widerstand gegenüber einem Bipolartransistor beispielsweise den Vorteil auf, dass er größere Leistungen bei geringeren Verlusten schalten kann, und dass er sich daher für die Steuerung eines Elektromotors besser eignet.

Es wird das zeitverzögerte Einschalten des veränderbaren Widerstandes bewirkt, indem das Steuersignal eine Schwellspannung des veränderbaren Widerstandes, ab dem dieser leitend wird, später erreicht. Dann ist das Steuersignal gegenüber einem Steuersignal einer her kömmlichen Anlaufschaltung verzögert, und zwar sowohl gegenüber einer herkömmlichen Anlaufschaltung ohne veränderbarem Widerstand als auch gegenüber einer herkömmlichen Anlaufschaltung mit veränderbarem Widerstand, bei der das Steuersignal ein pulsweitenmoduliertes Signal ist. Da der Frequenzfilter das Steuersignal des veränderbaren Widerstandes verzögert, bewirkt er ebenfalls eine Verzögerung des Ausgangssignals des veränderbaren Widerstandes gegenüber dem Ausgangssignal des veränderbaren Widerstandes eines Steuerteils ohne den Frequenzfilter.

In einer bevorzugten Ausführungsform ist der Frequenzfilter als ein Tiefpassfilter, insbesondere als ein passiver Tiefpass erster Ordnung, ausgebildet. In dieser Ausführungsform ist die Ausgangsspannung des Tiefpassfilters das Steuersignal für den veränderbaren Widerstand.

Ganz besonders bevorzugt ist der Tiefpassfilter als RC- Glied ausgebildet. Denn dann erfordert er lediglich zwei herkömmliche kostengünstige Bauteile, nämlich den Widerstand und den Kondensator, so dass er, beziehungsweise der Steuerteil, sehr kostengünstig herstellbar ist.

Es ist aber ebenfalls bevorzugt, andere Frequenzfilter, insbesondere höherer Ordnung, oder anstelle eines passiven Frequenzfilters einen aktiven Frequenzfilter, zu verwenden.

Der Frequenzfilter bewirkt bevorzugt nicht nur, dass der Einschaltzeitpunkt des Transistors, dass heißt der Zeitpunkt, in dem der veränderbare Widerstand seine Schwellspannung überschreitet, verzögert ist. Sondern bevorzugt bewirkt der Frequenzfilter, dass der Betrag der Ausgangsspannung mit einer endlichen Steigung ansteigt. Bei sprungartiger Veränderung der am Frequenzfilter anliegenden Eingangsspannung ändert sich daher die Ausgangsspannung des Frequenzfilters nicht sprungartig. Beispielsweise bei einem Tiefpassfilter als Frequenzfilter steigt die Ausgangsspannung bei einer sprungartigen Änderung der Eingangsspannung langsam an. Der endliche Anstieg des Betrages der Ausgangsspannung bewirkt am veränderbaren Widerstand einen endlichen Anstieg des Steuersignals. Dadurch steigt der Betrag des Stromes in einem Lastkreis des veränderbaren Widerstandes ebenfalls mit einer endlichen Steigung an.

Es ist bevorzugt, dass der Gleichstrom- Elektromotor am Lastkreis des veränderbaren Widerstandes angeordnet ist. Dann führt ein solcher Frequenzfilter aufgrund der endlichen Steigung des im Lastkreis fließenden Stromes zudem zu einer Reduzierung des Anlaufstromes des Gleichstrom- Elektromotors.

In einer bevorzugten Ausführungsform umfasst das Steuerteil der Anlaufschaltung einen Ausgangszweig, der dem veränderbaren Widerstand parallel geschaltet ist. Besonders bevorzugt ist im Ausgangszweig ein Ausgangswiderstand vorgesehen, der einen Spannungsabfall bewirkt.

Bei am Lastkreis angeschlossenem Gleichstrom- Elektromotor führt der Spannungsabfall zwar einerseits zu einem Leistungsverlust im Ausgangswiderstand. Er bewirkt aber andererseits einen unverzögerten Motorstart, da durch den Ausgangswiderstand unmittelbar ein Strom fließen kann. Daher bewirkt er eine sprungartige Änderung des Anlaufstromes im Elektromotor beim Einschalten oder Umpolen. Der Ausgangswiderstand ist aber so einstellbar, dass einerseits der durch ihn verursachte Leistungsverlust möglichst gering ist, und andererseits der am Lastkreis angeschlossene Gleichstrom- Elektromotor ausreichend langsam beschleunigt wird.

In einer weiteren bevorzugten Ausführungsform ist am veränderbaren Widerstand ein Gegenkopplungszweig vorgesehen. Besonders bevorzugt ist im Gegenkopplungszweig ein Gegenkopplungswiderstand vorgesehen, so dass ein Teil der Ausgangsspannung des veränderbaren Widerstandes auf den Steuerkreis des veränderbaren Widerstandes zurück geführt ist. Aufgrund des Spannungsabfalls am Gegenkopplungswiderstand ist der Betrag des Steuersignals des veränderbaren Widerstandes reduziert und steigt langsamer an.

Die Aufgabe wird weiterhin gelöst mit einer Anlaufschaltung mit einem erfindungsgemäßen Steuerteil. Durch das zeitlich verzögerte und langsam ansteigende Steuersignal am veränderbaren Widerstand ist der von der Anlaufschaltung zur Verfügung gestellte Anlaufstrom beim Einschalten und Umpolen zunächst reduziert.

Bevorzugt umfasst die Anlaufschaltung einen Schalterteil, der einen ersten Schalter und einen zweiten Schalter umfasst. Mit dem Schalterteil ist der Gleichstrom- Elektromotor bevorzugt sowohl einschaltbar als auch umpolbar als auch ausschaltbar. Dabei ist es bevorzugt, dass sich beim Umpolen die Drehrichtung des Gleichstrom- Elektromotors umkehrt.

Es ist bevorzugt, dass die Anlaufschaltung entweder ein Steuerteil umfasst, mit dem die Anlaufspannung des Gleichstrom- Elektromotors für eine Drehrichtung einstellbar ist, oder dass sie ein Steuerteil umfasst, mit dem die Anlaufspannung des Gleichstrom- Elektromotors für beide Drehrichtungen einstellbar ist, oder dass sie zum Einstellen der Anlaufspannung des Gleichstrom- Elektromotors für beide Drehrichtungen jeweils ein Steuerteil umfasst. Das Ausführen der Anlaufschaltung mit jeweils einem Steuerteil für jede Drehrichtung des Elektromotors hat den Vorteil, dass der Anlaufstrom in Abhängigkeit von der Drehrichtung verschieden einstellbar ist. Im Gegensatz dazu ist ein Anlaufschaltung mit nur einem Steuerteil für beide Drehrichtung kostengünstiger herstellbar. In Abhängigkeit vom Anwendungsfall ist auch die Ausführungsform mit nur einem Steuerteil für ein der beiden Drehrichtungen wählbar.

Die Eingangsspannung des Steuerteils, insbesondere des Frequenzfilters, ist bevorzugt eine Gleichspannung, insbesondere eine Batteriespannung. Es ist ebenfalls bevorzugt vorgesehen, dass der Gleichstrom- Elektromotor an dieselbe Gleichspannung anschließbar ist. In dieser Ausführungsform ist die Anlaufschaltung mit nur geringem Bauteilaufwand realisierbar.

Die Aufgabe wird weiterhin gelöst mit einer Verstellvorrichtung mit einem Gleichstrom- Elektromotor und einer Anlaufschaltung mit einem erfindungsgemäßen Steuerteil. Eine solche Verstellvorrichtung ist zum Verstellen eines Verstellbauteils, beispielsweise eines Fensters oder eines Schiebedachs in einem Kraftfahrzeug, vorgesehen. Zum Verstellen des Verstellbauteils umfasst sie bevorzugt mechanische Bauteile, beispielsweise Getriebebauteile. Da die Anlaufspannung des Gleichstrom- Elektromotors der Verstellvorrichtung mit dem erfindungsgemäßen Steuerteil einstellbar ist, ist der Anlaufstrom des Gleichstrom- Elektromotors reduziert. Beim Einschalten oder Umpolen des Gleichstrom- Elektromotors läuft dieser daher langsamer an, so dass Getriebebauteile der Verstrellvorrichtung dabei weniger stark beschleunigt werden und die dadurch verursachte Geräuschentwicklung der Verstellvorrichtung reduziert ist.

Im Folgenden wird die Erfindung anhand von **Figuren** beschrieben. Die **Figuren** sind lediglich beispielhaft und schränken den allgemeinen Erfindungsgedanken nicht ein.
- **Fig. 1**: zeigt in den **Fig. 1(a)** und **Fig. 1(b)** Anlaufschaltungen für einen Gleichstrom- Elektromotor gemäß dem Stand der Technik, und

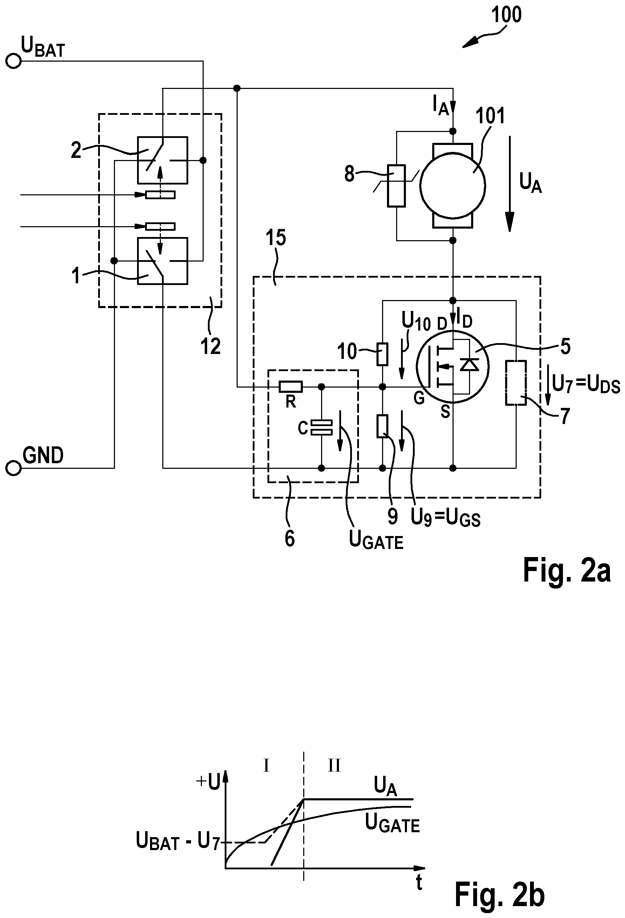

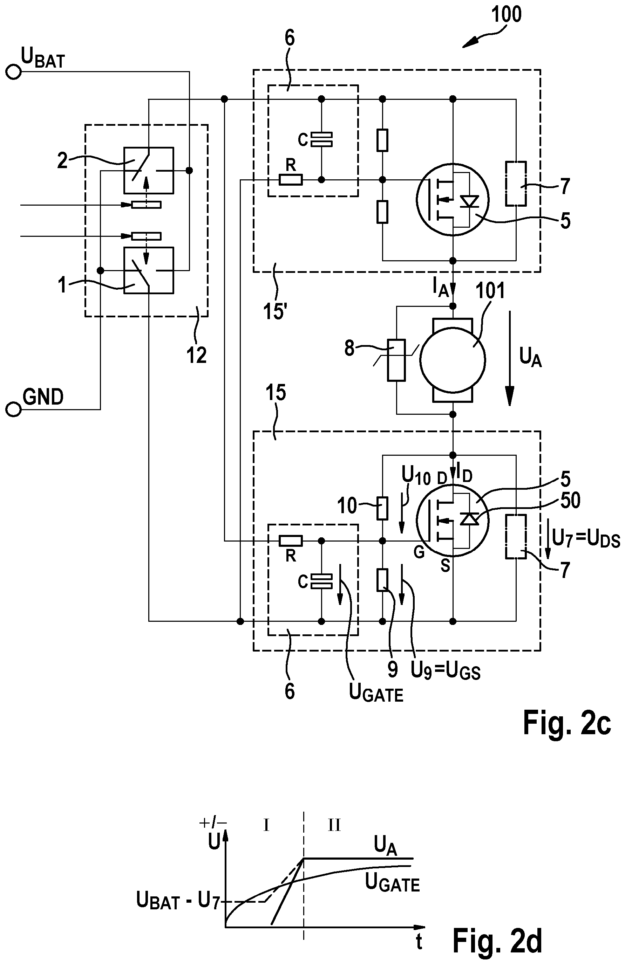

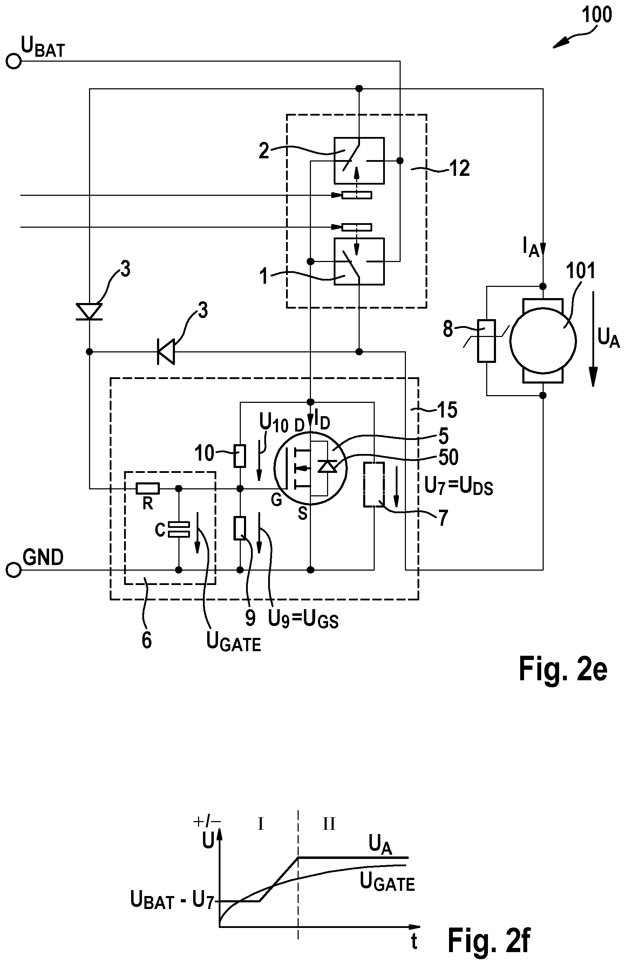

- **Fig. 2**: zeigt in der **Fig. 2(a)** eine erfindungsgemäße Anlaufschaltung mit einem erfindungsgemäßen Steuerteil für eine Drehrichtung des Gleichstrom- Elektromotors, in der **Fig. 2(c)** eine Anlaufschaltung mit zwei Steuerteilen gemäß der **Fig. 2(a)****,** wobei jedes der Steuerteile für eine Drehrichtung des Gleichstrom- Elektromotors vorgesehen ist, und in der **Fig. 2 (e)** eine Anlaufschaltung mit dem Steuerteil der **Fig. 2(a)****,** wobei der Steuerteil für beide Drehrichtungen des Gleichstrom- Elektromotors vorgesehen ist.

**Fig. 1** zeigt in den **Fig. 1(a)** und **Fig. 1(b)** die oben bereits beschriebenen Anlaufschaltungen 100 für einen Gleichstrom- Elektromotor 101 gemäß dem Stand der Technik.

**Fig. 2** zeigt in der **Fig. 2(a)** eine erfindungsgemäße Anlaufschaltung 100 mit einem erfindungsgemäßen Steuerteil 15 für eine Drehrichtung des Gleichstrom- Elektromotors 101, in der **Fig. 2(c)** eine Anlaufschaltung 100 mit zwei Steuerteilen 15 gemäß der **Fig. 2(a)****,** wobei jedes der Steuerteile 15 für eine Drehrichtung des Gleichstrom- Elektromotors 101 vorgesehen ist, und in der **Fig. 2 (e)** eine Anlaufschaltung 100 mit dem Steuerteil 15 der **Fig. 2(a)****,** wobei der Steuerteil 15 für beide Drehrichtungen des Gleichstrom- Elektromotors 101 vorgesehen ist.

Der Steuerteil 15 umfasst einen Frequenzfilter 6, der hier als passiver Tiefpass erster Ordnung, nämlich als RC- Glied mit einem Widerstand R und einer Kondensator C ausgebildet ist. Im Folgenden werden die Begriffe Frequenzfilter 6, Tiefpass und RC-Glied daher synonym verwendet. Das Ausgangssignal des Tiefpasses 6 ist hier die über dem Kondensator C abfallende Ausgangsspannung U_{GATE}.

Weiterhin umfasst der Steuerteil 15 einen veränderbaren Widerstand 5, der hier als n- Kanal MOSFET ausgebildet ist. Im Folgenden werden daher die Begriffe veränderbarer Widerstand 5, n- Kanal MOSFET und MOSFET synonym verwendet.

Der MOSFET 5 ist in Source- Schaltung geschaltet und weist einen Gate-Anschluss G, einen Source- Anschluss S und einen Drain- Anschluss D auf, wobei das Steuersignal des MOSFET's die zwischen dem Gate- Anschluss G und dem Source- Anschluss S abfallende Spannung U_{GS} ist, und wobei dass Ausgangssignal der am Drain- Anschluss D fließende Strom I_{D} ist.

Dem Tiefpass 6 ist ein Eingangswiderstand 9 des MOSFET's 5 parallel geschaltet, so dass die Ausgangsspannung U_{GATE} des Tiefpasses 6 die am Eingangswiderstand 9 des MOSFET's 5 abfallende Spannung Ug ist, wobei diese gleichzeitig das Eingangssignal U_{GS} zum Steuern des MOSFET's 5 bildet.

Die Ausgangsspannung des MOSFET's 5 ist die Drain- Source- Spannung U_{DS}. Dem Ausgang des MOSFET's 5 ist optional ein Ausgangswiderstand 7 parallel geschaltet, so dass die Ausgangsspannung U_{DS} des MOSFET's 5 der an dem Ausgangswiderstand 7 abfallenden Spannung U₇ entspricht.

Weiterhin ist optional ein Gegenkopplungswiderstand 10 zwischen dem Gate- Anschluss G und dem Drain- Anschluss D des MOSFET's 5 vorgesehen, über den die Gegenkopplungsspannung U₁₀ abfällt.

Dieser Schaltungsaufbau des Steuerteils 15 ist für die Anlaufschaltungen 100 der **Fig. 2 (a) - (f)** gleich. Jedoch sind prinzipiell auch andere Frequenzfilter 6 verwendbar, beispielsweise aktive Frequenzfilter oder Frequenzfilter höherer Ordnung oder Frequenzfilter, welche anstelle eines Kondensators eine Spule vorsehen, solange sie ein zeitverzögertes Einschalten des veränderbaren Widerstandes 5 ermöglichen. Weiterhin sind anstelle eines n- Kanal MOSFET's 5 auch andere veränderbare Widerstände verwendbar, beispielsweise bipolare Transistoren.

An die Anlaufschaltung 100 ist hier ein Gleichstrom- Elektromotor 101 angeschlossen, dem ein Varistor 8 parallel geschaltet ist, der einen Freilauf des Gleichstrom- Elektromotors 101 beim Ausschalten und Umpolen des Elektromotors 10 ermöglicht und daher Überspannungen verhindert. Der Gleichstrom- Elektromotor 101 ist in einem Lastkreis des MOSFET's 5 vorgesehen, so dass er zwischen dem Drain- Anschluss D des MOSFET'S 5 und entweder der Batteriespannung U_{BAT} oder der Masse GND angeschlossen ist.

Alternativ zu dem Varistor 8 ist auch eine Diode, insbesondere eine Supressordiode, oder ein anderes, als Überspannungsschutz geeignetes Bauteil einsetzbar. Oder es kann in Abhängigkeit von der Motorinduktivität auch auf den Überspannungsschutz verzichtet werden.

Die Anlaufschaltung 100 umfasst weiterhin einen Schaltteil 12 mit einem ersten Schalter 1 und einem zweiten Schalter 2. Die beiden Schalter 1, 2 sind als Relais ausgebildet und wahlweise mit einer Gleichspannung U_{BAT}, die hier als Batteriespannung vorgesehen ist, oder mit einer Masse GND verbindbar. Im Folgenden werden daher die Begriffe Gleichspannung U_{BAT} und Batteriespannung synonym verwendet.

Sofern beide Schalter 1, 2 mit der Masse GND verbunden sind, ist der Gleichstrom- Elektromotor 101 ausgeschaltet. Ist einer der beiden Schalter 1, 2, beispielsweise der erste Schalter 1, mit der Batteriespannung U_{BAT} verbunden, während der zweite Schalter 2 mit der Masse GND verbunden ist, ist der Gleichstrom- Elektromotor 101 eingschaltet und wird in eine Drehrichtung betrieben. Sofern der zweite Schalter 2 mit der Batteriespannung U_{BAT} verbunden ist, während der erste Schalter 1 mit der Masse GND verbunden ist, dass heißt bei umgekehrter Polung, ist der Gleichstrom- Elektromotor 101 ebenfalls eingeschaltet, wird aber in der umgekehrten Drehrichtung betrieben. Zum Umpolen der Drehrichtung des eingeschalteten Gleichstrom- Elektromotors 101 wird daher der an die Masse GND angeschlossene Schalter 2 zunächst ebenfalls mit der Batteriespannung U_{BAT}, und der andere Schalter 1 dann mit der Masse GND verbunden.

Der Schaltteil 12 ermöglicht daher das Einschalten und Ausschalten des Gleichstrom- Elektromotors 101 sowie das Umpolen der Drehrichtung des Gleichstrom- Elektromotors 101.

Die Funktion des Steuerteils wird am Beispiel der in **Fig. 2(a), (b)** dargestellten Anlaufschaltung 100 beschrieben. Dabei wird der Ausgangswiderstand 7 zunächst nicht berücksichtigt.

Wird der zweite Schalter 2 an die Batteriespannung U_{BAT} angeschlossen, liegt diese am Tiefpass 6 an. Dadurch wird der Kondensator C aufgeladen. Die am Kondensator C abfallende Ausgangsspannung U_{GATE} des Tiefpasses 6 ist die Steuerspannung U_{GS} des MOSFET's 5. Sobald die Steuerspannung U_{GS} eine Schwellspannung des MOSFET's 5 übersteigt, wird der MOSFET 5 leitend, so dass ein Drain- Strom I_{D} vom Drain- Anschluss D zum Source- Anschluss S des MOSFET's 5 fließen kann.

Der Gleichstrom- Elektromotor 101 liegt dabei ebenfalls an der Batteriespannung U_{BAT} an. Jedoch fällt beim Einschalten oder Umpolen zunächst keine Spannung U_{A} an ihm ab, da kein Drain- Strom I_{D} im MOSFET fließen kann. In diesem Zustand fällt die Batteriespannung U_{BAT} über dem MOSFET 5 ab.

Erst wenn das Steuersignal, nämlich die Ausgangsspannung U_{GATE} des Tiefpassfilters 6, die Schwellspannung überschreitet, fließt ein mit dem Steuersignal U_{GATE} ansteigender Drain- Strom I_{D}. Der MOSFET 5 befindet sich dann zunächst in einem Abschnürbetrieb I, in dem er einen etwa konstanten Kanalwiderstand (nicht gezeigt) aufweist. Dabei nimmt die Ausgangsspannung U_{DS} des MOSFET's 5 ab, bis der MOSFET die Grenze zum ohmschen Betrieb II überschreitet, in dem sich der Kanalwiderstand etwa wie ein ohmscher Widerstand verhält. Dadurch ändert sich die Ausgangsspannung U_{DS} im ohmschen Betrieb II des MOSFET's 5 nicht mehr wesentlich, sondern ist etwa konstant.

Die Anlaufspannung des Gleichstrom- Elektromotors 101 ist die Differenz zwischen der Batteriespannung U_{BAT} und der Ausgangsspannung U_{DS} des MOSFET's 5.

Die **Fig. 2(b)** zeigt schematisch die Ausgangsspannung U_{GATE} des Tiefpassfilters 6 sowie die Anlaufspannung U_{A} des Gleichstrom- Elektromotors 101. Dabei zeigt die durchgehende Linie die Anlaufspannung U_{A} ohne den optionalen Ausgangswiderstand 7 am MOSFET 5.

Wenn der Ausgangswiderstand 7 dem MOSFET 5 parallel geschaltet ist, fällt bereits beim Einschalten oder Umpolen eine Ausgangsspannung U₇ über dem Ausgangswiderstand 7 ab, die einen unverzögerten Anlaufstrom I_{A} im Gleichstrom- Elekromotor 101 ermöglicht. Dabei befindet sich der MOSFET 5 aber noch in einem Sperrbetrieb, in dem die Schwellspannung noch nicht überschritten ist, so dass noch kein Drain- Strom I_{D} fließen kann. Mit Überschreiten der Schwellspannung beginnt der Drain- Strom I_{D} zu fließen, wobei die Ausgangsspannung U_{DS} fällt, bis der im ohmschen Betrieb II wieder eine etwa konstante Ausgangsspannung U_{DS} am MOSFET 5 abfällt und am Gleichstrom- Elektromotor 101 wieder die maximale Anlaufspannung U_{A} abfällt.

Der Gegenkopplungswiderstand 10 beeinflusst bei beiden Schaltungsvarianten die Steilheit des Spannungsabfalls der Ausgangsspannung U_{DS}-Denn solange die Schwellspannung noch nicht überschritten ist, fällt die Ausgangsspannung U_{DS} über den Gegenkopplungswiderstand 10 und den Gate- Anschluss G des MOSFET 5 ab. Bei Überschreiten der Schwellspannung beginnt der Drain- Strom I_{D} zu fließen, so dass die Ausgangsspannung U_{DS} des MOSFET's 5, und dadurch ebenfalls die über den Gegenkopplungswiderstand 10 abfallende Spannung U₁₀, verringert werden. Der MOSFET 5 bleibt dadurch länger im Abschnürbetrieb I.

Bei der Schaltung der **Fig. 2 (c)** ist ein erster Steuerteil 15 für den Betrieb des Gleichstrom- Elektromotors 101 in eine erste Drehrichtung, und ein zweiter Steuerteil 15' für den Betrieb des Gleichstrom- Elektromotors 101 in die umgekehrte zweite Drehrichtung vorgesehen. Beim Betrieb des Gleichstrom- Elektromotors 101 in die erste Drehrichtung ist dieser über eine parasitäre Diode 50 des MOSFET's 5 des zweiten Steuerteils 15' mit der Batteriespannung U_{BAT} verbunden. Dementsprechend ist der Gleichstrom- Elektromotor 101 beim Betrieb in die zweite Drehrichtung über die eine parasitäre Diode 50 des MOSFET's 5 des ersten Steuerteils 15 mit der Batteriespannung U_{BAT} verbunden.

Alternativ oder zusätzlich zur Verringerung des Spannungsabfalls über die parasitäte Diode 50 ist aber auch eine zusätzliche Diode (nicht gezeigt) mit geringem Spannungsabfall parallel zum MOSFET 5 verwendbar, beispielsweise eine Schottkydiode.

## Patentansprüche

1. Anlaufschaltung (100) für einen Gleichstrom- Elektromotor (101), die ein Steuerteil (15), mit einem veränderbaren Widerstand (5) umfasst, mit dem eine Anlaufspannung (U_{A}) des Gleichstrom- Elektromotors (101) einstellbar ist, wobei der veränderbare Widerstand (5) mittels eines Steuersignals (U_{GS}) steuerbar ist, wobei der Steuerteil (15) einen Frequenzfilter (6) umfasst, dessen Ausgangssignal (U_{GATE}) das Steuersignal (U_{GS}) bildet und so vorgesehen ist, dass der veränderbare Widerstand (5) zeitverzögert eingeschaltet wird, **indem das Steuersignal (U_{GS}) eine Schwellspannung des veränderbaren Widerstands (5), ab dem di eser leitet, später erreicht,** und wobei das Steuersignal **(U_{GS})** das Eingangssignal des veränderbaren Widerstandes (5) ist, **wobei**
die Eingangsspannung des Frequenzfilters (6) eine Gleichspannung (U_{BAT}) ist, wobei die Anlaufspannung (U_{A}) des Gleichstrom- Elektromotors (101) die Differenz zwischen **dieser** Gleichspannung (U_{BAT}) und einer Ausgangsspannung (U_{DS}) des veränderbaren Widerstandes (5) ist.

2. Anlaufschaltung (100) nach Anspruch 1, **dadurch gekennzeichnet, dass** der Gleichstrom- Elektromotor (101) am Lastkreis des veränderbaren Widerstandes (5) angeordnet ist.

3. Anlaufschaltung (100) nach einem der vorherigen Ansprüche, **dadurch gekennzeichnet, dass** die Gleichspannung (U_{BAT}) eine Batteriespannung ist.

4. Anlaufschaltung (100) nach einem der vorherigen Ansprüche, **dadurch gekennzeichnet, dass** der Frequenzfilter (6) als ein Tiefpassfilter, insbesondere ein passiver Tiefpass erster Ordnung, ausgebildet ist.

5. Anlaufschaltung (100) nach einem der vorherigen Ansprüche, **dadurch gekennzeichnet, dass** er einen Ausgangswiderstand (7) umfasst, der dem veränderbaren Widerstand (5) parallel geschaltet ist.

6. Anlaufschaltung (100) nach einem der vorherigen Ansprüche, **dadurch gekennzeichnet, dass** am veränderbaren Widerstand (5) ein Gegenkopplungswiderstand (10) vorgesehen ist.

7. Anlaufschaltung (100) nach einem der vorherigen Ansprüche, **dadurch gekennzeichnet, dass** die Eingangsspannung (U_{BAT}) des Frequenzfilters (6) eine Batteriespannung (U_{BAT}) ist.

8. Anlaufschaltung (100) nach einem der vorherigen Ansprüche, **dadurch gekennzeichnet, dass** der veränderbare Widerstand (5) als n-Kanal MOSFET ausgebildet ist.

9. Anlaufschaltung (100) nach einem der vorherigen Ansprüche, **dadurch gekennzeichnet, dass** der Gleichstrom- Elektromotor (101) zwischen einem Drain- Anschluss (D) des veränderbaren Widerstandes (5) und entweder der Gleichspannung (U_{BAT}) oder einer Masse (GND) angeschlossen ist.

10. Anlaufschaltung (100) nach einem der vorherigen Ansprüche, **dadurch gekennzeichnet, dass** das Steuerteil (15) und der Gleichstrom- Elektromotor (101) an dieselbe Gleichspannung (U_{BAT}) anschließbar sind.

11. Anlaufschaltung (100) nach einem der vorherigen Ansprüche, **dadurch gekennzeichnet, dass** sie einen Schalterteil (12) umfasst, der einen ersten Schalter (1) und einen zweiten Schalter (2) umfasst.

12. Anlaufschaltung (100) nach einem der vorherigen Ansprüche, **dadurch gekennzeichnet, dass** der erste Schalter (1) und der zweite Schalter (2) als Relais ausgebildet und wahlweise mit der Gleichspannung (U_{BAT}) oder mit der Masse (GND) verbindbar sind.

13. Anlaufschaltung (100) nach einem der vorherigen Ansprüche, **dadurch gekennzeichnet, dass** der Gleichstrom- Elektromotor (101) mit dem Schalterteil (12) einschaltbar, umpolbar und ausschaltbar ist.

14. Anlaufschaltung (100) nach einem der vorherigen Ansprüche, **dadurch gekennzeichnet, dass** sie ein Steuerteil (15) umfasst, mit dem die Anlaufspannung (U_{A}) des Gleichstrom- Elektromotors (101) für eine Drehrichtung einstellbar ist, oder mit dem die Anlaufspannung (U_{A}) des Gleichstrom- Elektromotors (101) für beide Drehrichtungen einstellbar ist, oder dass sie zum Einstellen der Anlaufspannung (U_{A}) des Gleichstrom-Elektromotors (101) für beide Drehrichtungen jeweils ein Steuerteil (15) umfasst.

15. Verstellvorrichtung mit einem Gleichstrom-Elektromotor (101) und einer Anlaufschaltung (100) nach einem der vorherigen Ansprüche.

## Claims

1. Starting circuit (100) for a DC electric motor (101), which starting circuit comprises a control part (15) with a variable resistor (5), using which variable resistor a starting voltage (U_{A}) of the DC electric motor (101) can be set, wherein the variable resistor (5) can be controlled by means of a control signal (U_{GS}), wherein the control part (15) comprises a frequency filter (6), the output signal (U_{GATE}) of which frequency filter forms the control signal (U_{GS}) and there is thus provision for the variable resistor (5) to be switched on in a time-delayed manner by virtue of the control signal (U_{GS}) later reaching a threshold voltage of the variable resistor (5), from which threshold voltage said variable resistor conducts, and wherein the control signal (U_{GS}) is the input signal of the variable resistor (5), wherein
the input voltage of the frequency filter (6) is a DC voltage (U_{BAT}), wherein the starting voltage (U_{A}) of the DC electric motor (101) is the difference between said DC voltage (U_{BAT}) and an output voltage (U_{DS}) of the variable resistor (5).

2. Starting circuit (100) according to Claim 1, **characterized in that** the DC electric motor (101) is arranged at the load circuit of the variable resistor (5) .

3. Starting circuit (100) according to either of the preceding claims, **characterized in that** the DC voltage (U_{BAT}) is a battery voltage.

4. Starting circuit (100) according to one of the preceding claims, **characterized in that** the frequency filter (6) is designed as a low-pass filter, in particular a passive low-pass filter of the first order.

5. Starting circuit (100) according to one of the preceding claims, **characterized in that** it comprises an output resistor (7), which is connected in parallel with the variable resistor (5).

6. Starting circuit (100) according to one of the preceding claims, **characterized in that** a negative-feedback resistor (10) is provided at the variable resistor (5).

7. Starting circuit (100) according to one of the preceding claims, **characterized in that** the input voltage (U_{BAT}) of the frequency filter (6) is a battery voltage (U_{BAT}).

8. Starting circuit (100) according to one of the preceding claims, **characterized in that** the variable resistor (5) is designed as an n-channel MOSFET.

9. Starting circuit (100) according to one of the preceding claims, **characterized in that** the DC electric motor (101) is connected between a drain terminal (D) of the variable resistor (5) and either the DC voltage (U_{BAT}) or earth (GND).

10. Starting circuit (100) according to one of the preceding claims, **characterized in that** the control part (15) and the DC electric motor (101) can be connected to the same DC voltage (UaAT) .

11. Starting circuit (100) according to one of the preceding claims, **characterized in that** it comprises a switch part (12), which comprises a first switch (1) and a second switch (2).

12. Starting circuit (100) according to one of the preceding claims, **characterized in that** the first switch (1) and the second switch (2) are designed as relays and can be connected either to the DC voltage (U_{BAT}) or to earth (GND).

13. Starting circuit (100) according to one of the preceding claims, **characterized in that** the DC electric motor (101) can be switched on, can have its polarity reversed and can be switched off using the switch part (12) .

14. Starting circuit (100) according to one of the preceding claims, **characterized in that** it comprises a control part (15), using which the starting voltage (U_{A}) of the DC electric motor (101) can be set for one direction of rotation, or using which the starting voltage (U_{A}) of the DC electric motor (101) can be set for both directions of rotation, or **in that** it comprises in each case one control part (15) for both directions of rotation for the purpose of setting the starting voltage (U_{A}) of the DC electric motor (101).

15. Adjustment device comprising a DC electric motor (101) and a starting circuit (100) according to one of the preceding claims.

## Revendications

1. Circuit de démarrage (100) pour un moteur électrique à courant continu (101), lequel comporte une partie de commande (15) ayant une résistance variable (5) qui permet de régler une tension de démarrage (U_{A}) du moteur électrique à courant continu (101), la résistance variable (5) pouvant être commandée au moyen d'un signal de commande (U_{GS}), la partie de commande (15) comportant un filtre de fréquence (6) dont le signal de sortie (U_{GATE}) forme le signal de commande (U_{GS}) et il est conçu de telle sorte que la résistance variable (5) est mise sous tension avec un retard dans le temps, en ce que le signal de commande (U_{GS}) atteint plus tard une tension de seuil de la résistance variable (5) à partir de laquelle celle-ci est passante, et le signal de commande (U_{GS}) étant le signal d'entrée de la résistance variable (5), la tension d'entrée du filtre de fréquence (6) étant une tension continue (U_{BAT}), la tension de démarrage (U_{A}) du moteur électrique à courant continu (101) étant la différence entre cette tension continue (U_{BAT}) et une tension de sortie (U_{DS}) de la résistance variable (5).

2. Circuit de démarrage (100) selon la revendication 1, **caractérisé en ce que** le moteur électrique à courant continu (101) est disposé sur le circuit de charge de la résistance variable (5).

3. Circuit de démarrage (100) selon l'une des revendications précédentes, **caractérisé en ce que** la tension continue (U_{BAT}) est une tension de batterie.

4. Circuit de démarrage (100) selon l'une des revendications précédentes, **caractérisé en ce que** le filtre de fréquence (6) est réalisé sous la forme d'un filtre passe-bas, notamment d'un filtre passe-bas passif du premier ordre.

5. Circuit de démarrage (100) selon l'une des revendications précédentes, **caractérisé en ce qu'**il comporte une résistance de sortie (7) qui est branchée en parallèle de la résistance variable (5).

6. Circuit de démarrage (100) selon l'une des revendications précédentes, **caractérisé en ce qu'**une résistance de contre-réaction (10) se trouve sur la résistance variable (5).

7. Circuit de démarrage (100) selon l'une des revendications précédentes, **caractérisé en ce que** la tension d'entrée (U_{BAT}) du filtre de fréquence (6) est une tension de batterie (U_{BAT}) .

8. Circuit de démarrage (100) selon l'une des revendications précédentes, **caractérisé en ce que** la résistance variable (5) est réalisée sous la forme d'un MOSFET à canal n.

9. Circuit de démarrage (100) selon l'une des revendications précédentes, **caractérisé en ce que** le moteur électrique à courant continu (101) est branché entre une borne de drain (D) de la résistance variable (5) et soit la tension continue (U_{BAT}), soit une masse (GND) .

10. Circuit de démarrage (100) selon l'une des revendications précédentes, **caractérisé en ce que** la partie de commande (15) et le moteur électrique à courant continu (101) peuvent être branchés à la même tension continue (U_{BAT}) .

11. Circuit de démarrage (100) selon l'une des revendications précédentes, **caractérisé en ce qu'**il comporte une partie à commutateur (12) qui comprend un premier commutateur (1) et un deuxième commutateur (2).

12. Circuit de démarrage (100) selon l'une des revendications précédentes, **caractérisé en ce que** le premier commutateur (1) et le deuxième commutateur (2) sont réalisés sous la forme de relais et peuvent être connectés, au choix, à la tension continue (U_{BAT}) ou à la masse (GND).

13. Circuit de démarrage (100) selon l'une des revendications précédentes, **caractérisé en ce que** la partie à commutateur (12) permet de mettre le moteur électrique à courant continu (101) en marche, d'inverser ses pôles et de le mettre à l'arrêt.

14. Circuit de démarrage (100) selon l'une des revendications précédentes, **caractérisé en ce qu'**il comporte une partie de commande (15) qui permet de régler la tension de démarrage (U_{A}) du moteur électrique à courant continu (101) pour un sens de rotation, ou qui permet de régler la tension de démarrage (U_{A}) du moteur électrique à courant continu (101) pour les deux sens de rotation, ou **en ce qu'**il comporte respectivement une partie de commande (15) servant à régler la tension de démarrage (U_{A}) du moteur électrique à courant continu (101) pour les deux sens de rotation.

15. Dispositif de positionnement comprenant un moteur électrique à courant continu (101) et un circuit de démarrage (100) selon l'une des revendications précédentes.
